# EUROPÄISCHE PATENTSCHRIFT

(11) **EP 2 190 615 B1**
(45) Veröffentlichungstag und Bekanntmachung des Hinweises auf die Patenterteilung: **29.12.2010**
(21) Anmeldenummer: 08801660.5
(22) Anmeldetag: 21.08.2008
(51) Int. Cl.: B23B 5/16

(54) **SCHÄLGERÄT ZUR BEARBEITUNG VON KUNSTSTOFFROHREN ODER VON MIT KUNSTSTOFF BESCHICHTETEN ROHREN**
STRIPPING UNIT FOR MACHINING PLASTIC PIPES OR PIPES COATED WITH PLASTIC
APPAREIL D'ÉCROÛTAGE POUR LE TRAITEMENT DE TUBES EN MATIÈRE PLASTIQUE OU DE TUBES REVÊTUS DE MATIÈRE PLASTIQUE

(30) Priorität: 22.08.2007 DE 102007039675; 27.09.2007 DE 102007046631
(43) Veröffentlichungstag der Anmeldung: 02.06.2010
(73) Patentinhaber: GBZ Mannheim GmbH & Co. KG, 67227 Frankenthal (DE); Friatec Aktiengesellschaft, 68229 Mannheim (DE)
(72) Erfinder: BORN, Reinhold, 64521 Gross-Gerau (DE); RIEDL, Günter, 64646 Heppenheim (DE)
(74) Vertreter: Mierswa, Klaus
(86) Internationale Anmeldenummer: PCT/EP2008/006884
(87) Internationale Veröffentlichungsnummer: WO 2009/024343

(56) Entgegenhaltungen:
- EP-A- 0 217 704
- WO-A-00/24537

## Beschreibung

Die Erfindung betrifft ein Schälgerät zur Bearbeitung von Kunststoffrohren oder von mit Kunststoff beschichteten Rohren, die mit einer Sperr- oder Oxidschicht überzogen sind, insbesondere zum Verschweißen oder Verkleben zweier solcher Rohre miteinander oder von Rohren mit Kunststoff-Fittings, -Muffen o.ä., zur umlaufend-spanförmigen Entfernung der Sperr- oder Oxidschicht auf der Außenfläche des Kunststoffrohres vor dem Verschweißvorgang quer bzw. im Wesentlichen quer zu dessen Längsachse, wobei das Schälgerät ein Gehäuse mit einer daraus hervorragenden, mit dem Gehäuse verbundenen Gewindespindel aufweist, an deren dem Gehäuse abgewandten Ende ein Spanndorn aufschraubbar ist, in welchen die Gewindespindel bei Drehung unter Mitnahme des Gehäuses sich einschraubt, wobei parallel zur Gewindespindel eine armförmige Gleitbacke angeordnet ist, welche mit einem Ende ebenfalls im Gehäuse gehaltert ist und welche an ihrem entgegengesetzten freien Ende ein Schälmesser trägt, welches in den Bereich des die Gewindespindel aufnehmenden Endes des Spanndorns ragt, gemäß dem Oberbegriff des Anspruchs 1.

### Stand der Technik:

Es ist eine Vielzahl von Schälgeräten zur Bearbeitung von Kunststoffrohren bekannt. Durch die DE 29615506 U ist ein solches Schälgerät mit einem auswechselbaren Messer zum Einsatz in das Schälgerät zur Bearbeitung von Kunststoffteilen bekannt geworden, die außen mit einer Sperr- oder Oxidschicht überzogen sind, wie Kunststoffrohre, insbesondere zum Verschweißen zweier solcher Rohre miteinander oder von Rohren mit Kunststoff-Fittings, -Muffen o.ä. zur Entfernung der Sperr- oder Oxidschicht auf dem Kunststoffteil vor dem Verschweißvorgang. Das Messer besitzt an seinem unteren, dem Kunststoffteil zugewandten Ende eine Schneide, auf deren beiden Seiten Schultern angeordnet sind, die der Schneide vorlaufen und als Führung dienende, dem zu bearbeitenden Kunststoffteil zugewandte Stirnflächen aufweisen, welche schräg verlaufend um einen kleinen Winkel geneigt sind, wobei die Schneide und die Höhe ihrer Schneidtiefe zwischen den Stirnflächen der Schultern hervorsteht.

Durch die DE 20107920 U ist des Weiteren ein Schälgerät in Form einer zweiarmigen Zange oder Zwinge zum Einschneiden oder Schälen einer äußeren Schicht oder von Schichten eines Kabels oder Rohres, insbesondere Kunststoffrohr oder Kunststoff beschichtetes Rohr bekannt geworden, umfassend einen ersten Arm mit einem Lager und einem Drehzapfen sowie einen zweiten Arm, der ein Gegenlager aufweist und gegenüber dem ersten Arm um den Drehzapfen von einer geöffneten in eine geschlossene Stellung und umgekehrt schwenkbar ist, wobei ein Messer entweder an dem ersten Arm im Bereich des Lagers oder an dem zweiten Arm im Bereich des Gegenlagers angeordnet ist. Das Lager bildet zusammen mit dem Gegenlager in geschlossener Stellung ein Aufnahmelager zur stabilen Mehrpunktlagerung und Rundführung des Schälgeräts bezüglich des Kabels oder Rohres, wobei der Drehzapfen in einer ersten Richtung senkrecht zu seiner Achse einen ersten Durchmesser und in einer zweiten Richtung senkrecht zu seiner Achse einen zweiten Durchmesser aufweist, welcher kleiner ist als der erste Durchmesser. Der zweite Arm weist ein Langloch auf, welches den Drehzapfen aufnimmt, in einer zur Richtung vom Lager zum Gegenlager im wesentlichen parallelen Richtung verläuft und durch eine Mehrzahl von in einer Reihe angeordneten Bohrungen und zwischen den Bohrungen liegenden Verengungen gebildet ist, wobei der Durchmesser der Bohrungen größer als der erste Durchmesser und die lichte Weite der Verengungen kleiner als der erste und größer als der zweite Durchmesser ist. Der Drehzapfen ist in Bezug auf seine Achse so ausgerichtet, dass dieser in geöffneter Stellung zur Aufweitung bzw. Verengung des Aufnahmelagers in Längsrichtung des Langlochs durch die Verengungen hindurch in jede der Bohrungen verschiebbar und in geschlossener Stellung gegenüber einer Verschiebung in dieser Richtung in einer der Bohrungen arretiert ist.

Durch die GB 821 862 ist ein Schälgerät bekannt geworden, welches eine drehbare Rohrgewindespindel aufweist, an deren ein Ende ein Dorn zum Einführen in ein zu bearbeitendes Rohr angeordnet ist. Innerhalb der Hohlspindel befindet sich eine weitere Gewindespindel zur Fixierung des Dornes innerhalb des Rohres durch Kontern der beiden Spindeln mittels einer Kontermutter. Die Rohrgewindespindel ist an ihrem entgegengesetzten Ende in einer Gewindeplatte drehbar gehaltert, die Handgriffe zum Drehen der Gewindeplatte aufweist. Parallel zur Rohrgewindespindel ist in der Gewindeplatte eine Stange montiert, an deren freien Ende ein Schneidmesser angeordnet ist. Die Stange ist mittels einer Verschraubung an der Gewindeplatte höhenmäßig parallel zur Rohrgewindespindel in äquidistanten Abständen verstellbar, so dass dadurch die Schneidtiefe des Messers in Stufen reguliert werden kann. Zur Spanung des Rohres wird beim Drehen der Gewindeplatte über das Gewinde der Rohrgewindespindel die Stange mit dem Schneidmesser um das Rohr schraubenartig herumgedreht.

Durch die EP-B1-0217704 ist eine ähnliche Vorrichtung zum Schaben mindestens eines Teils der äußeren Umfangsoberfläche eines im Wesentlichen zylindrischen Rohres an einem seiner Enden bekannt geworden. Die Vorrichtung besitzt einem dehnbaren Dorn, um die Vorrichtung gegen das äußere des Rohres koaxial zu halten, eine mit dem Dorn verbundenen Antriebsstange, eine an der Stange befestigte Platte, die zu der Stange im Wesentlichen senkrecht angeordnet ist, ein ebenfalls scheibenförmiges Teil, das an die Platte anstoßend angebracht ist, bezüglich welcher dieses Teil im Wesentlichen parallel beweglich ist, ein Blockiermittel, um die Position der Scheibe auf der Platte in einem bestimmten Radialabstand von der Achse des Rohres festzulegen, eine Betätigungs- und Steuereinheit, die an der Scheibe angebracht ist und sich im Wesentlichen parallel zum Dorn in der Nähe der äußeren Oberfläche des Rohres erstreckt sowie ein Schabewerkzeug, das auf der Betätigungs- und Steuereinheit angebracht ist und ein Schabemesser aufweist. Das Schabewerkzeug weist ferner einen Fühler auf, der formschlüssig mit dem Schabemesser und mit der Betätigungs- und Steuereinheit elastisch verbunden ist und mit der äußeren Oberfläche des Rohres derart in Berührung kommt, dass die Eindringtiefe des Messers in das Rohr im Wesentlichen gehalten wird. Der Fühler und das Schabemesser sind mittels eines Federblattes mit der Betätigungs- und Steuereinheit verbunden. Der Dorn besitzt einen Kegel mit Stufen, wobei eine der Stufen im Wesentlichen axial in das Innere des Endes des Rohres passt, mehrere knieförmig gebogene Arme, die mit dem Kegel mechanisch verbunden und dazu bestimmt sind, sich gegen die innere Oberfläche des Rohres abzustützen sowie einen Stopfen, der auf der Antriebsstange angebracht ist, um den Abstand der Arme zu der inneren Oberfläche des Rohres sicher zustellen. Hierzu kann der Dorn drei Stützarme aufweisen, die im Wesentlichen unter einem Winkel von 120° zueinander angeordnet sind. Die Antriebsstange wird durch einen einseitig gerichteten Betätigungsgriff gedreht.

### Technische Aufgabe:

Der Erfindung liegt die Aufgabe zugrunde, ein Schälgerät der eingangs genannten Gattung zu schaffen, welches mittels eines einfachen Aufbaus eine definierte Schälkraft auf das zu schälende Kunststoffrohr oder mit Kunststoff beschichtete Rohr aufzubringen imstande ist, wobei das Schälmesser maschinell oder von Hand während des Schneidvorgangs bewegbar sein soll.

### Offenbarung der Erfindung sowie deren Vorteile:

Diese Aufgabe wird bei einem Schälgerät der eingangs genannten Gattung dadurch gelöst, dass die Gleitbacke mittels eines Hebelmechanismus in Richtung der Gewindespindel schwenkbar und über diesen Hebelmechanismus verriegelbar ist, so dass das Schälmesser in eine vorgebbare Stellung bezüglich der Gewindespindel und des Spanndorns bringbar und in lösbarer Weise verriegelbar ist, zum Aufbringen einer definierten bzw. einstellbaren Anpresskraft des Schälmessers auf das zu schälende Rohr und zum Abheben des Schälmessers vom Rohr.

In weiterer erfindungsgemäßer Ausgestaltung des Schälgeräts bildet der Hebelmechanismus zum Verschwenken der Gleitbacke einen schließ- und öffenbaren Verriegelungsmechanismus mit einem Totpunkt für die Gleitbacke zum Aufbringen der Anpresskraft des Schälmessers auf das zu schälende Rohr.

Das erfindungsgemäße Schälgerät besitzt den Vorteil, dass dasselbe bei einem einfachen Aufbau eine definierte Schälkraft auf ein zu schälende Kunststoffrohr oder ein mit Kunststoff beschichtetes Rohr aufzubringen imstande ist, wobei das Schälmesser in einfacher Weise manipuliert werden kann und sowohl maschinell als auch von Hand während des Schneidvorgangs bewegt werden kann. Ebenso ist das erfindungsgemäße Schälgerät klein und handlich.

Die armförmige Gleitbacke des Schälgerätes ist somit mittels des Hebelmechanismus schwenkbar und verriegelbar, so dass das Schälmesser in eine vorgebbare Stellung bezüglich des Spanndorns bringbar und in lösbarer Weise verriegelbar ist.

In weiterer erfindungsgemäßer Ausgestaltung des Schälgerätes ist die Gleitbacke mittels einer drehbar innerhalb des Gehäuses gehalterten Drehachse drehbar auf einem Teilkreis gelagert.

In weiterer erfindungsgemäßer Ausgestaltung des Schälgerätes besteht der Hebelmechanismus, im Wesentlichen, aus der Gleitbacke, einem Hebelarm und einem Hebel, der innerhalb des Gehäuses mittels einer Drehachse drehbar gelagert ist und an dem der Hebelarm mit einem ersten Ende mittels einer Drehachse am Hebel drehbar angelenkt ist, wobei der Hebelarm mit seinem zweiten Ende mittels einer weiteren Drehachse an der Gleitbacke drehbar angeordnet ist. Der Hebelmechanismus stellt somit ein lösbares Kniegelenk mit einem Totpunkt dar. In weiterer Ausgestaltung des Schälgerätes ist das dem Gehäuse zugewandte Ende der Gleitbacke hammerförmig mit einem Hammerkopf gestaltet, wobei im oberen Bereich des Hammerkopfes die Drehachse des Hebelarmes und im unteren Bereich des Hammerkopfes die innerhalb des Gehäuses gelagerte Drehachse der Gleitbacke angeordnet sind.

In weiterer Ausgestaltung des Schälgerätes ist der Hebel gekröpft gestaltet und besteht aus drei Teilstücken, nämlich aus einem mittels der Drehachse im Gehäuse angelenkten ersten Teilstück, auf welches ein auf diesem ersten Teilstück ungefähr rechtwinklig stehendes zweites Teilstück folgt, auf welches wiederum ein auf dem zweiten Teilstück ungefähr rechtwinklig stehendes drittes und frei endendes Teilstück folgte so dass das erste Teilstück und das dritte Teilstück parallel oder mehr oder weniger parallel verlaufen.

In weiterer Ausgestaltung des Schälgerätes weist das dem Gehäuse zugewandte Ende der Gleitbacke einen Hammerkopf auf, wobei im oberen Bereich des Hammerkopfes die Drehachse des Hebelarmes und im unteren Bereich des Hammerkopfes die Drehachse der Gleitbacke angeordnet sind, wobei die Drehachse der Gleitbacke innerhalb des Gehäuses gelagert ist.

In weiterer Ausgestaltung des Schälgerätes besitzt die Gleitbacke in der Seitenansicht eine sehnen- oder kreisabschnittsförmige Gestaltung, wobei die obere Kontur der Gleitbacke konkav oder sphärisch gekrümmt verläuft im Gegensatz zur unteren Kontur der Gleitbacke, welche geradlinig oder im Wesentlichen geradlinig gestaltet ist.

In weiterer Ausgestaltung des Schälgerätes ist auf das hintere, aus dem Gehäuse austretende Ende der Gewindespindel ein Drehgriff aufgesetzt ist, welcher gegebenenfalls einen Innensechskant in Richtung der Längs- und Drehachse der Gewindespindel zum Aufsetzen eines Schraubgerätes aufweist.

In weiterer Ausgestaltung des Schälgerätes besitzt der Hebel im Bereich des Überganges des ersten Teilstücks in das zweite Teilstück eine kurvenförmig konkav oder sphärisch gekrümmte Vertiefung, innerhalb der der Hebelarm mit einem ersten Ende mittels seiner Drehachse am Hebel drehbar angelenkt ist.

In weiterer Ausgestaltung des Schälgerätes ist das vordere Ende der Gleitbacke hammerförmig mit einem Hammerkopf gestaltet ist, wobei im oberen Teil des Hammerkopfes eine kurvenförmig konkav gekrümmte Vertiefung angeordnet ist, innerhalb derselben sich die Drehachse mitsamt dem zweiten Ende des Hebelarmes befindet.

In einer weiteren Ausgestaltung der Erfindung weist der Spanndorn die Form eines mit einem Innengewinde versehenen Rohrstücks auf, in welches die Gewindespindel unter Mitnahme des Gehäuses bei Drehung sich einzuschrauben imstande ist.

Kurzbezeichnung der Zeichnung, in der zeigen.
- Figur 1: eine Draufsicht auf das länglich-stabförmige Schälgerät von oben in dessen Längsausdehnung
- Figur 2: eine um 90 Grad nach oben geklappte Ansicht des Schälgeräts der Figur 1
- Figur 3: einen Längsschnitt durch das Schälgerät der Figur 1 längs der Linie A-A
- Figur 4: eine perspektivische Ansicht des Schälgerätes der Figuren 1 und 2
- Figur 5: eine vergrößerte perspektivische Ansicht des Schälgerätes der Figuren 1 und 2 und
- Figur 6: ein Schälgerät bei dessen Einsatz zum Schälen eines Rohrabschnittes eines Kunststoffrohres eines Abgangs bei einer Versorgungsleitung.

### Bevorzugte Ausführungsform der Erfindung:

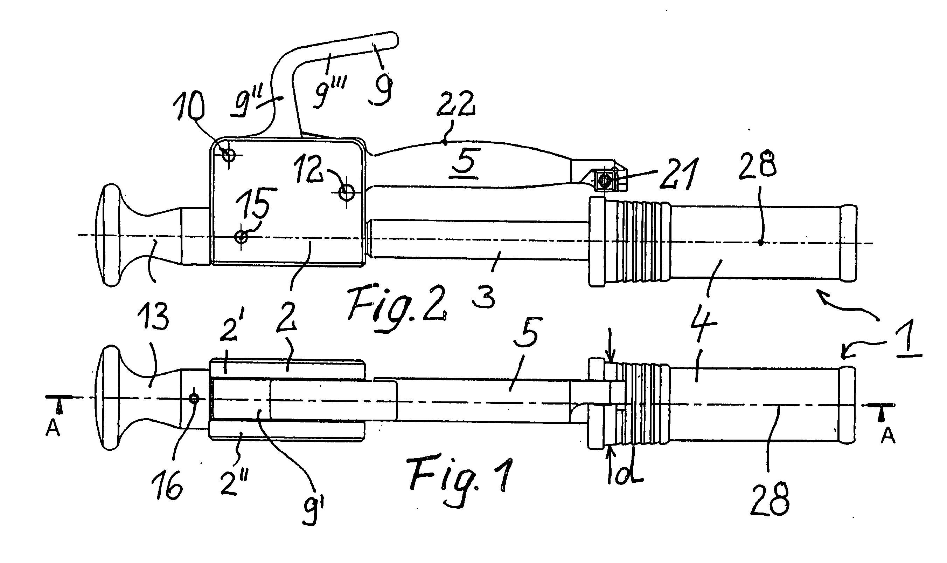

Das erfindungsgemäße Schälgerät 1 der Figuren 1 bis 5 ist ein länglich-stabförmiger Schälapparat, welcher unter anderem ein Gehäuse 2 aufweist, bestehend aus zwei Seitenwänden 2' und 2", welche bevorzugt planparallel sind, sowie einem von den Seitenwänden 2', 2" eingeschlossenen oder umschlossenen Korpus 2"', welcher eine Bohrung 27 aufweist.

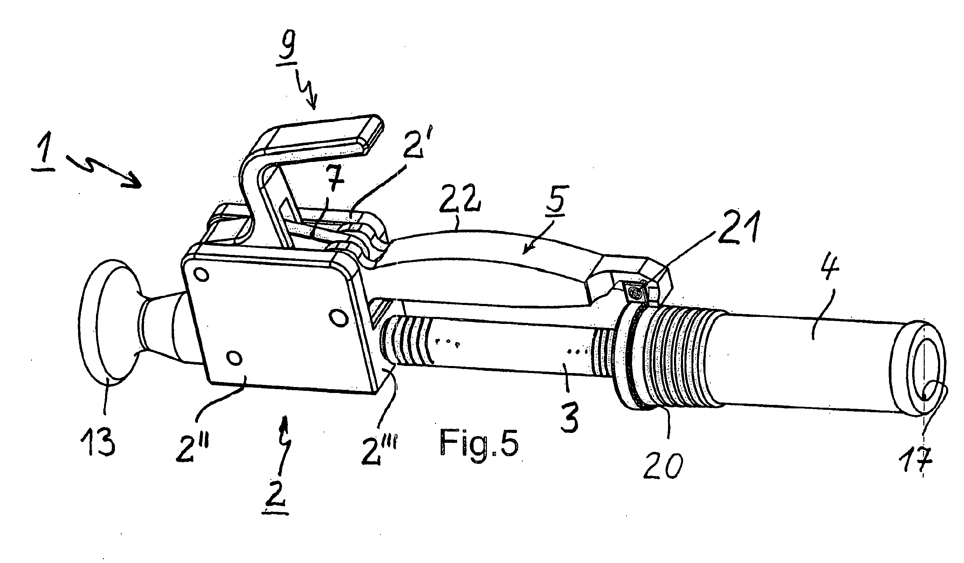

Der Korpus kann zum Beispiel durch eine schmale Seitenwand 2'" zwischen den Seitenwänden 2' und 2" gebildet sein, wie es aus Figur 5 ersichtlich ist; er kann aber auch massiv sein mit den Deckflächen 2' und 2".

Innerhalb des Korpus 2"' und der Bohrung 27 ist eine Gewindespindel 3 gehaltert, welche rückwärtig aus dem Korpus 2"' bzw. aus dem Gehäuse 2 austritt, wobei ein Drehgriff 13 fest auf das Ende der Gewindespindel 3 aufmontiert ist. Die Angabe rückwärtig bezieht sich somit auf eine benachbarte Lage zum Drehgriff 13 bzw. zum Ansatzpunkt der Drehkraft des Schälapparates. Gehäuse 2 und Gewindespindel 3 sind mittels eines die Seitenwände 2', 2" des Gehäuses 2 sowie die Gewindespindel 3 durchstoßenden Stiftes 15 fest miteinander verbunden, so dass beim Ansetzen einer Drehkraft am rückwärtigen Ende der Gewindespindel 3 oder bei einer Drehung des Drehgriffes 13 die Gewindespindel 3 mitsamt dem Gehäuse 2 in Drehung versetzt wird, wobei Drehachse die Längsachse der Gewindespindel 3 ist.

Auf das dem Gehäuse 2 entgegengesetzte bzw. entfernte Ende der Gewindespindel 3 ist zur Führung derselben Rohrstück 4 aufgesetzt, welches vorzugsweise aus Kunststoff besteht und welches eine Gewindebohrung 30 aufweist, in welche die Gewindespindel 3 mehr oder weniger einschraubbar ist. Dieses Rohrstück 4 dient als Spanndorn in die Höhlung eines zu schälenden Kunststoffrohres 25, was unten beschrieben ist.

Das Innere des Rohrstücks 4 kann in zwei Teile aufgeteilt sein. Der der Gewindespindel 3 abgewandte hintere Teil des Rohrstücks 4 ist zum Beispiel als glatte Bohrung 17 ausgeführt, welche einen größeren lichten Durchmesser aufweist als der lichte Innendurchmesser der Gewindebohrung 30 des vorderen Teils des Rohrstücks 4. Auf diese Weise besitzt das Rohrstück 4 innen eine umlaufende Schulter 18, welche den Teil der Gewindebohrung 30 von dem Teil mit glatter Bohrung 17 trennt.

Die in das Rohrstück 4 in die Gewindebohrung 30 geschraubte Gewindespindel 3 ragt in den in den Figuren 1 bis 4 gezeigten Stellungen bis zur inneren Schulter 18 in das Rohrstück 4 hinein, wobei auf das Ende der Gewindespindel 3 stirnseitig eine Schraube 19 mit einer Unterlegscheibe oder eine Hutschraube 19 geschraubt ist, welche auf der Schulter 18 aufliegt. Diese Stellung stellt den hinteren Anschlag des Schälgerätes für den Beginn eines Schälvorganges dar. Auf die beschriebene Weise ist damit die Gewindespindel 3 in der Gewindebohrung 30 des Rohrstücks 4 drehbar gehaltert bei gegenüber der Gewindespindel 3 feststehendem Rohrstück 4.

Innerhalb des Gehäuses 2, vorzugsweise ebenfalls zwischen den Seitenwänden 2' und 2", ist ein Hebelarmmechanismus gehaltert zum Bewegen einer armförmigen Gleitbacke 5, welche an ihrem vom Gehäuse entfernt ragenden, freien Ende ein Schälmesser 21 trägt.

Der Hebelarmmechanismus besteht aus einem gekröpften Hebel 9, dessen ein Ende mittels einer Drehachse 10 innerhalb des Gehäuses 2 drehbar angeordnet ist. Vorzugsweise ist der Hebel 9 zwischen den Seitenwänden 2' und 2" drehbar gehaltert in einer Ebene, in der auch die Gewindespindel 3 liegt. Der Hebel 9 besteht aufgrund seiner Kröpfung im Wesentlichen aus drei Teilstücken, nämlich aus einem mittels der Drehachse 10 im Gehäuse 2 angelenkten ersten Teilstück 9', auf welches ein auf diesem ersten Teilstück 9' ungefähr rechtwinklig stehendes zweites Teilstück 9" folgt, auf welches wiederum ein auf dem zweiten Teilstück 9" ungefähr rechtwinklig stehendes drittes und frei endendes Teilstück 9"' folgt, so dass das erste Teilstück 9' und das dritte Teilstück 9"' ungefähr oder mehr oder weniger parallel verlaufen.

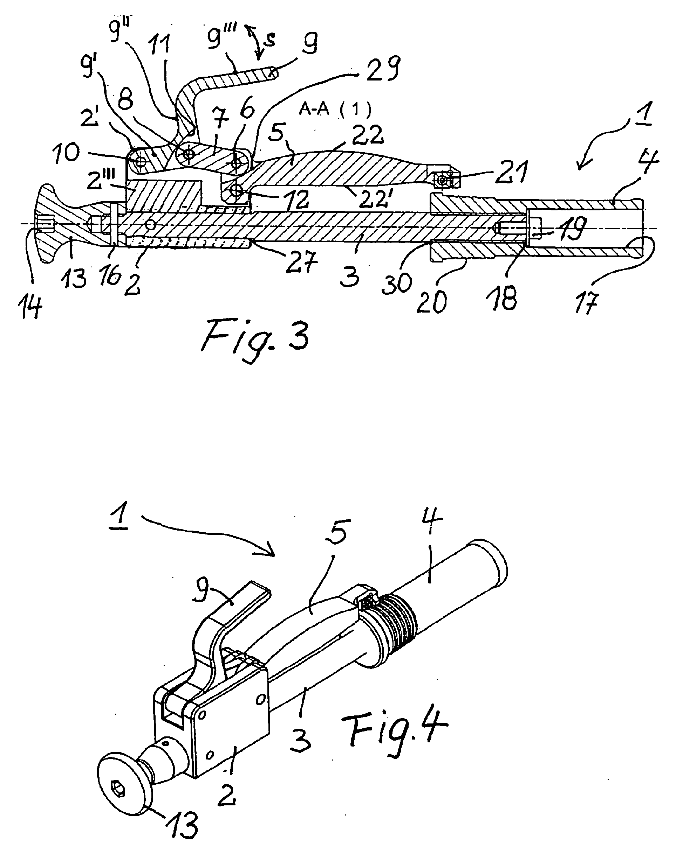

Im Bereich des ungefähr rechtwinkligen Überganges des ersten Teilstücks 9' in das zweite Teilstück 9" besitzt der Hebel 9 eine kurvenförmig konkav oder sphärisch gekrümmte Vertiefung 11, innerhalb der ein, vorzugsweise geradliniger, Hebelarm 7 mit einem ersten Ende mittels einer Drehachse 8 am Hebel 9 drehbar angelenkt ist; die Drehachse 8 befindet sich somit im Bereich der Vertiefung 11 des Hebels 9. Die Vertiefung 11 ist in der in Figur 3 gezeigten Ausgestaltung eben. Das entgegengesetzte zweite Ende des Hebelarmes 7 ist mittels einer weiteren Drehachse 6 an dem vorderen Ende der armförmigen Gleitbacke 5 drehbar angeordnet. Dieses vordere Ende der armförmigen Gleitbacke 5 ist hammerförmig mit einem Hammerkopf 31 gestaltet, wobei im oberen Teil des Hammerkopfes 31 eine ebenfalls kurvenförmig konkav gekrümmte Vertiefung 29 angeordnet ist, innerhalb derselben sich die Drehachse 6 mitsamt dem zweiten Ende des Hebelarmes 7 befindet. Die Vertiefung 29 ist in der in Figur 3 gezeigten Ausgestaltung ebenfalls eben.

Unterhalb der Drehachse 6 im unteren Teil des Hammetrkopfes 31 des vorderen Endes der Gleitbacke 5 befindet sich eine Drehachse 12, welche innerhalb des Gehäuses 2, vorzugsweise zwischen den Seitenwänden 2' und 2", gehaltert ist und um welche die Gleitbacke 5 drehbar ebenfalls innerhalb des Gehäuses 2 mittels ihres Hammerkopfes 31 gehaltert ist und zwar ebenfalls in einer Ebene, in welcher der Hebel 9 schwenkbar ist und die Gewindespindel 3 liegt. Somit ist die Gleitbacke 5 mittels der drehbar innerhalb des Gehäuses 2 gehalterten Drehachse 12 drehbar auf einem Teilkreis gelagert.

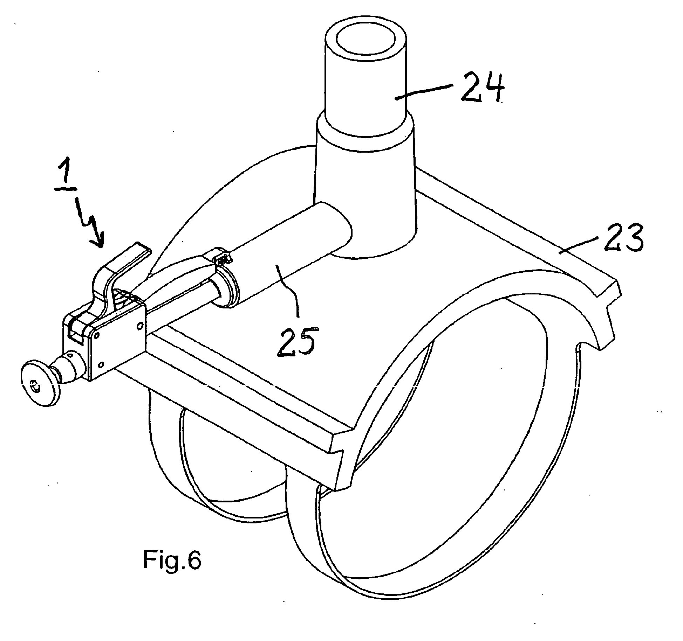

Am entgegengesetzten oder hinteren, freien Ende der Gleitbacke 5 trägt diese ein Schälmesser 21 mit einer Schneidkante, weiches im Wesentlichen senkrecht zur Längsachse 28 der Gewindespindel 3 ausgerichtet ist und welches um wenige Zehntelmillimeter, nämlich um die Schäl- oder Eindringtiefe, das zugewandete Ende des Rohrstücks 4, welches die Gewindespindel 3 haltert, nach unten, nämlich hin zum zu schälenden Rohr 25, Figur 6, überragt.

Der Hebelmechanismus, bestehend im Wesentlichen aus Hebel 9, Hebelarm 7 und Gleitbacke 5, bildern einen schließ- und öffenbaren Verriegelungsmechanismus mit einem Totpunkt für die Gleitbacke 5 zum Aufbringen einer definierten bzw. einstellbaren Anpresskraft des Schälmessers 21 auf das zu schälende Rohr 25 und zum Abheben des Schälmessers 21 vom Rohr 25.

Die Gleitbacke 5 besitzt in der Seitenansicht gemäß der Figuren 2, 3, 4 und 5 eine mehr oder weniger sehnen- oder kreisabschnittsförmige Gestaltung, wobei die obere Kontur 22 der Gleitbacke 5 konkav oder sphärisch gekrümmt verläuft im Gegensatz zur unteren Kontur 22' der Gleitbacke 5, welche im Wesentlichen geradlinig gestaltet ist. Die Höhe dieses Sehnen- oder Kreisabschnitts der Gleitbacke 5, ebenso wie die Länge der Gleitbacke 5, dient zur Vorgabe einer definierten Anpresskraft des Schälmessers 21 am Ende der Gleitbacke 5 auf das zu schälende Rohr 25. Im vorliegenden Beispiel beträgt die Anpresskraft cirka 6 kp. Der Hebelmechanismus besitzt somit einen Totpunkt zur Verriegelung der Gleit backe 5 in der Schneid- oder Arbeitsstellung des Schälmessers 21. Beim Verschwenken des Hebels 9 vor und zurück in Richtung des Doppelpfeils s in Figur 3 bewegen sich der Hebel 9 sowie die Gleitbacke 5, unter Vermittlung des Hebelarmes 7, jeweils auf einer Teilkreisbahn um ihre Drehachsen 10 bzw. 12. Beim Herunterdrücken und Schließen des Hebels 9 im Uhrzeigersinn in die Schneidstellung der Gleitbacke 5 wird diese unter Vermittlung des sich, mehr oder weniger, in die Waagrechte streckenden Hebelarmes 7 in den Figuren 2, 3 und 4 ebenfalls im Uhrzeigersinn gedreht. Dabei überfährt die Gleitbacke 5 den Totpunkt, so dass sich der Hebelmechanismus nach dem Überfahren des Totpunktes während des Schneidvorgangs nicht selbstätig öffnen kann. Durch Verschwenken des Hebels 9 im Gegenuhrzeigersinn erfolgt das Lösen der Gleitbacke 5 aus der Schneidstellung, welche sich dann im Gegenuhrzeigersinn dreht.

Die Vertiefung 11 innerhalb des Hebels 9 im Bereich des Übergangs des ersten Teilstücks 9' in das zweite Teilstück 9" sowie die Vertiefung 29 innerhalb des Hammerkopfes 31 dienen zur Aufnahme des Hebelarmes 7 und somit dazu, dass der Hebel 9 sowie die Gleitbacke 5 innerhalb des Gehäuses 2 eine gleich bleibende Tiefe zwischen den beiden Seitenwänden 2' und 2" des Gehäuses 2 aufweisen, wie es insbesondere der Figur 5 zu entnehmen ist.

Die Ausführung eines Schälvorgangs mittels des erfindungsgemäßen Schälgerätes 1 ist insbesondere der Figur 6 zu entnehmen. Figur 6 zeigt einen Teilabschnitt eines Leitungsrohres 23 für ein gasförmiges oder flüssiges Medium, wobei auf das Leitungsrohr 23 ein erstes Abgangsrohr 24 senkrecht aufgesetzt ist, von welchem wiederum senkrecht ein zweites Abgangsrohr 25 absteht, um beispielsweise einen Hausanschluss durchzuführen. Der Durchmesser des Leitungsrohres 23 ist relativ groß gegenüber dem Durchmesser des ersten und des zweiten Abgangsrohres 24, 25.

Zur Durchführung eines Schälvorgangs der äußeren Zylinderoberfläche des zweiten Abgangsrohres 25 wird das Schälgerät 1 in geöffneter Stellung des Hebels 9 und somit mit angehobenem Schälmesser 21 mit dem Rohrstück 4 als. Spanndorn in die Innenbohrung des Abgangsrohres 25 eingepresst, was zum Beispiel durch Aufschlagen mittels des Handballens auf den Drehgriff 13 erfolgen kann. Zur Bewerkstelligung dieses Einpressvorgangs besitzt der das Ende der Gewindespindel 3 aufnehmende, dem Gehäuse 2 zugewandte Teil des Rohrstücks 4 eine leicht gestufte Kontur 20, wie es insbesondere den Figuren 1 bis 3 zu entnehmen ist. Das Ende des Rohrstücks 4 besitzt einen Außendurchmesser d, welcher geringfügig, um wenige Zehntelmillimeter, größer ist, als der lichte Innendurchmesser des Abgangsrohres 25. Dadurch kann das Rohrstück 4 fest in das Abgangsrohr 25 gepresst werden, so dass sich das Rohrstück 4 beim Schälvorgang nicht innerhalb des Abgangsrohres 25 dreht.

Nunmehr erfolgt über das Absenken des Hebels 9 im Uhrzeigersinn die Auflage des Schälmessers 21 am Ende der Gleitbacke 5 auf das zu schälende Ende des Abgangsrohres 25. Zur Erleichterung des Schälvorganges kann der Drehgriff 13 einen Innensechskant 14 aufweisen, in welchen ein Sechskantstift eines Bohrschraubers, wie Akkubohrschrauber, zum Aufbringen der Drehkraft eingeführt werden kann. Bei Drehung des Sechskantstiftes dreht sich das Gehäuse 2 mitsamt der Gewindespindel 3, welche sich in den im Ende des Abgangsrohres 25 festsitzenden Spanndorn 4 vorschraubt. Die Länge der Gleitbacke bestimmt dabei die Tiefe der abzuschälenden Fläche des Abgangsrohres 25.

Die Verankerung des Einspanndornes 4 innerhalb der Innenbohrung des Abgangsrohres 25 kann natürlich auch durch einen anderen Haltemechanismus erfolgen, beispielsweise kann das dem Gehäuse 2 entfernt liegende Ende des Einspanndornes 4 in geeigneter Weise innerhalb der Innenbohrung des Abgangsrohres 25 gespreizt werden. Auch der Hebelmechanismus kann anders gestaltet sein; es muss nur sicher gestellt sein, dass die armförmige Gleitbacke 5 während des Schälvorganges eine definierte bzw. vorgegebene Schneidkraft in gleichmäßiger Weise auf die abzuschälende Fläche des Abgangsrohres 25 aufzubringen imstande ist.

### Gewerbliche Anwendbarkeit:

Der Gegenstand der Erfindung ist insbesondere als Schälgerät zur Bearbeitung von Kunststoffrohren oder von mit Kunststoff beschichteten Rohren, die mit einer Sperr- oder Oxidschicht überzogen sind, insbesondere zum Verschweißen oder Verkleben zweier solcher Rohre miteinander oder von Rohren mit Kunststoff-Fittings, -Muffen o.ä., zur umlaufend-spanförmigen Entfernung der Sperr- oder Oxidschicht auf der Außenfläche des Kunststoffrohres quer bzw. im Wesentlichen quer zu dessen Längsachse vor dem Verschweißvorgang, gewerblich anwendbar. Die Nützlichkeit des Gegenstandes der Erfindung besteht insbesondere darin, dass mit demselben eine vorgebbare und somit definierte Kraft zum Schälen oder Schaben des Rohres auf dasselbe aufgegeben werden kann, so dass bei der Bearbeitung des Rohres immer eine gleich bleibende, einstellbare Schneidtiefe eingehalten wird.

## Patentansprüche

1. Schälgerät zur Bearbeitung von Kunststoffrohren (25) oder von mit Kunststoff beschichteten Rohren (25), die mit einer Sperr- oder Oxidschicht überzogen sind, insbesondere zum Verschweißen oder Verkleben zweier solcher Rohre miteinander oder von Rohren mit Kunststoff-Fittings, -Muffen o.ä., zur umlaufend-spanförmigen Entfernung der Sperr- oder Oxidschicht auf der Außenfläche des Kunststoffrohres quer bzw. im Wesentlichen quer zu dessen Längsachse vor dem Verschweißvorgang, wobei das Schälgerät ein Gehäuse (2) mit einer daraus hervorragenden, mit dem Gehäuse (2) verbundenen Gewindespindel (3) aufweist, an deren dem Gehäuse (2) abgewandten Ende ein Spanndorn (4) aufschraubbar ist, in welchen die Gewindespindel (3) bei Drehung unter Mitnahme des Gehäuses (2) sich einschraubt, wobei parallel zur Gewindespindel (3) eine armförmige Gleitbacke (5) angeordnet ist, welche mit einem Ende ebenfalls im Gehäuse (2) gehaltert ist und welche an ihrem entgegengesetzten freien Ende ein Schälmesser (21) trägt, welches in den Bereich des die Gewindespindel (3) aufnehmenden Endes des Spanndorns (4) ragt,
**dadurch gekennzeichnet,**
**dass** die Gleitbacke (5) mittels eines Hebelmechanismus in Richtung der Gewindespindel (3) schwenkbar und über diesen Hebelmechanismus verriegelbar ist, so dass das Schälmesser (21) in eine vorgebbare Stellung bezüglich der Gewindespindel (3) und des Spanndorns (4) bringbar und in lösbarer Weise verriegelbar ist, zum Aufbringen einer definierten bzw. einstellbaren Anpresskraft des Schälmessers (21) auf das zu schälende Rohr (25) und zum Abheben des Schälmessers (21) vom Rohr (25).

2. Schälgerät nach Anspruch 1,
**dadurch gekennzeichnet, dass** der Hebelmechanismus zum Verschwenken der Gleitbacke (5) einen schließ- und öffenbaren Verriegelungsmechanismus mit einem Totpunkt für die Gleitbacke (5) zum Aufbringen der Anpresskraft des Schälmessers (21) auf das zu schälende Rohr (25) bildet.

3. Schälgerät nach Anspruch 1 oder 2,
**dadurch gekennzeichnet, dass** die Gleitbacke (5) mittels einer drehbar innerhalb des Gehäuses (2) gehalterten Drehachse (12) drehbar auf einem Teilkreis gelagert ist.

4. Schälgerät nach einem der vorherigen Ansprüche,
**dadurch gekennzeichnet, dass** der Hebelmechanismus, im Wesentlichen, aus der Gleitbacke (5), einem Hebelarm (7) und einem Hebel (9) besteht, welcher innerhalb des Gehäuses (2) mittels einer Drehachse (10) drehbar gelagert ist und an welchem der Hebelarm (7) mit einem ersten Ende mittels einer Drehachse (8) am Hebel (9) drehbar angelenkt ist, wobei der Hebelarm (7) mit seinem zweiten Ende mittels einer weiteren Drehachse (6) an der Gleitbacke (5) drehbar angeordnet ist.

5. Schälgerät nach einem der vorherigen Ansprüche,
**dadurch gekennzeichnet, dass** das dem Gehäuse (2) zugewandte Ende der Gleitbacke (5) hammerförmig mit einem Hammerkopf (31) gestaltet ist, wobei im oberen Bereich des Hammerkopfes (31) die Drehachse (6) des Hebelarmes (7) und im unteren Bereich des Hammerkopfes (31) die innerhalb des Gehäuses (2) gelagerte Drehachse (12) der Gleitbacke (5) angeordnet sind.

6. Schälgerät nach einem der vorherigen Ansprüche,
**dadurch gekennzeichnet, dass** der Hebel (9) gekröpft ist und aus drei Teilstücken besteht, nämlich aus einem mittels der Drehachse (10) im Gehäuse (2) angelenkten ersten Teilstück (9'), auf welches ein auf diesem ersten Teilstück (9') ungefähr rechtwinklig stehendes zweites Teilstück (9") folgt, auf welches wiederum ein auf dem zweiten Teilstück (9") ungefähr rechtwinklig stehendes drittes und frei endendes Teilstück (9"') folgt, so dass das erste Teilstück (9') und das dritte Teilstück (9"') parallel oder mehr oder weniger parallel verlaufen.

7. Schälgerät nach einem der vorherigen Ansprüche,
**dadurch gekennzeichnet, dass** die Gleitbacke (5) in der Seitenansicht eine sehnen- oder kreisabschnittsförmige Gestaltung besitzt, wobei die obere Kontur (22) der Gleitbacke (5) konkav oder sphärisch gekrümmt verläuft im Gegensatz zur unteren Kontur (22') der Gleitbacke (5), welche im Wesentlichen geradlinig gestaltet ist.

8. Schälgerät nach einem der vorherigen Ansprüche,
**dadurch gekennzeichnet, dass** auf das hintere, aus dem Gehäuse (2) austretende Ende der Gewindespindel (3) ein Drehgriff (13) aufgesetzt ist, welcher gegebenenfalls einen Innensechskant (14) in Richtung der Längs- und Drehachse (28) der Gewindespindel (3) zum Aufsetzen eines Schraubgerätes aufweist.

9. Schälgerät nach einem der vorherigen Ansprüche,
**dadurch gekennzeichnet, dass** der Hebel (9) im Bereich des Überganges des ersten Teilstücks (9') in das zweite Teilstück (9") eine kurvenförmig konkav oder sphärisch gekrümmte Vertiefung (11) besitzt, innerhalb der der Hebelarm (7) mit einem ersten Ende mittels seiner Drehachse (8) am Hebel (9) drehbar angelenkt ist.

10. Schälgerät nach einem der vorherigen Ansprüche,
**dadurch gekennzeichnet, dass** im oberen Teil des Hammerkopfes (31) der Gleitbacke (5) eine kurvenförmig konkav gekrümmte Vertiefung (29) angeordnet ist, innerhalb derselben sich die Drehachse (6) mitsamt dem zweiten Ende des Hebelarmes (7) befindet.

11. Schälgerät nach einem der vorherigen Ansprüche,
**dadurch gekennzeichnet, dass** sich unterhalb der Drehachse (6) im unteren Teil des Hammerkopfes (31) des vorderen Endes der Gleitbacke (5) die Drehachse (12) befindet, welche innerhalb des Gehäuses (2), vorzugsweise zwischen den Seitenwänden (2',2"), gehaltert ist und um welche die Gleitbacke (5) drehbar ebenfalls innerhalb des Gehäuses (2) mittels ihres Hammerkopfes (31) gehaltert ist in eine Ebene, in welcher der Hebel (9) schwenkbar ist und in welcher die Gewindespindel (3) liegt, so dass die Gleitbacke (5) mittels der drehbar innerhalb des Gehäuses (2) gehalterten Drehachse (12) drehbar auf einem Teilkreis gelagert ist.

12. Schälgerät nach Anspruch 1,
**dadurch gekennzeichnet, dass** der Spanndorn (4) die Form eines mit einem Innengewinde (30) versehenen Rohrstücks (4) aufweist, in welches die Gewindespindel (3) unter Mitnahme des Gehäuses (2) bei Drehung sich einzuschrauben imstande ist.

## Claims

1. A peeling tool for processing plastic pipes (25) or pipes (25) coated with plastic that are covered with a barrier layer or with an oxide layer, especially for purposes of welding or gluing two such pipes together or pipes having plastic fittings, plastic sleeves or the like, in order to circumferentially cut away the barrier layer or the oxide layer that is on the outer surface of the plastic pipe crosswise, or essentially crosswise, to its longitudinal axis prior to the welding procedure, whereby the peeling tool comprises a housing (2) having a threaded spindle (3) which projects from and is connected to the housing (2) and onto whose end facing away from the housing (2) a clamping mandrel (4) can be screwed, and when the threaded spindle (3) is turned, it screws itself into said clamping mandrel (4), while carrying the housing along, whereby parallel to the threaded spindle (3), there is an arm-shaped sliding pad (5), one end of which is likewise held in the housing (2) while the other, free end of the sliding pad (5) opposite from the housing (2) has a peeling blade (21) that projects into the area of the end of the clamping mandrel (4) that accommodates the threaded spindle (3),
**characterized in that**
the sliding pad (5) can be swiveled in the direction of the threaded spindle (3) by means of a lever mechanism and can be locked by this lever mechanism, so that the peeling blade (21) can be brought into a predefinable position relative to the threaded spindle (3) and to the clamping mandrel (4), and it can be detachably locked, for purposes of applying a defined or adjustable contact pressure of the peeling blade (21) onto the pipe (25) that is to be peeled, and for lifting the peeling blade (21) off the pipe (25).

2. The peeling tool according to Claim 1,
**characterized in that**
the lever mechanism for swiveling the sliding pad (5) forms a locking mechanism that can be opened and closed and that has a dead point for the sliding pad (5) in order to apply the contact pressure of the peeling blade (21) onto the pipe (25) that is to be peeled.

3. The peeling tool according to Claim 1 or 2,
**characterized in that**
the sliding pad (5) is rotatably mounted on a pitch circle by means of a pivot (12) rotatably held inside the housing (2).

4. The peeling tool according to one of the preceding claims,
**characterized in that**
the lever mechanism consists essentially of the sliding pad (5), a lever arm (7) and a lever (9) that is rotatably mounted inside the housing (2) by means of a pivot (10) and onto which a first end of the lever arm (7) is rotatably joined to the lever (9) by means of a pivot (8), whereby the second end of the lever arm (7) is rotatably arranged on the sliding pad (5) by means of another pivot (6).

5. The peeling tool according to one of the preceding claims, **characterized in that** the end of the sliding pad (5) facing the housing (2) is configured to be hammer-shaped with a hammer head (31), whereby the pivot (6) of the lever arm (7) is arranged in the upper area of the hammer head (31), while the pivot (12) of the sliding pad (5) is arranged inside the housing (2) in the lower area of the hammer head (31).

6. The peeling tool according to one of the preceding claims, **characterized in that** the lever (9) is offset and consists of three portions, namely, a first portion (9') which is joined in the housing (2) by means of the pivot (10), this is followed by a second portion (9") that is positioned approximately at a right angle to the first portion (9'), and this, in turn, is followed by a free-ending third portion (9"') that is positioned approximately at a right angle to the second portion (9"), so that the first portion (9') and the third portion (9"') run parallel or more or less parallel to each other.

7. The peeling tool according to one of the preceding claims, **characterized in that** the sliding pad (5), as seen from the side, has the form of a chord portion or circular segment, whereby the upper contour (22) of the sliding pad (5) is concave or spherically curved, in contrast to the lower contour (22') of the sliding pad (5), which is essentially rectilinear.

8. The peeling tool according to one of the preceding claims, **characterized in that** a turning handle (13) is placed onto the end of the threaded spindle (3) that comes out of the housing (2), said turning handle (13) having a hexagonal socket (14) in the direction of the longitudinal and rotational axis (28) of the threaded spindle (3), where a screwing tool can be placed.

9. The peeling tool according to one of the preceding claims, **characterized in that**, in the area of the transition from the first portion (9') to the second portion (9"), the lever (9) has a curvilinear-concave or spherically curved depression (11) within which the first end of the lever arm (7) is rotatably joined to the lever (9) by means of its pivot (8).

10. The peeling tool according to one of the preceding claims, **characterized in that** a curvilinear-concave curved depression (29) is arranged in the upper part of the hammer head (31) of the sliding pad (5), and the pivot (6), together with the second end of the lever arm (7), is located inside said depression (29).

11. The peeling tool according to one of the preceding claims, **characterized in that** the pivot (12) is located below the pivot (6) in the lower part of the hammer head (31) of the front end of the sliding pad (5), said pivot (12) being accommodated inside the housing (2), preferably between the side walls (2', 2"), and the sliding pad (5) likewise being rotatably accommodated inside the housing (2) around said pivot (12) by means of its hammer head (31) in a plane in which the lever (9) can be swiveled and in which the threaded spindle (3) lies, so that the sliding pad (5) is mounted so that it can rotate on a pitch circle by means of the pivot (12) that is rotatably accommodated inside the housing (2).

12. The peeling tool according to Claim 1, **characterized in that** the clamping mandrel (4) has the shape of a pipe piece (4) provided with an inner thread (30), so that the threaded spindle (3), while carrying along the housing (2), can be screwed into said pipe piece (4) when it is turned.

## Revendications

1. Appareil d'écroûtage pour le traitement de tubes en matière plastique (25) ou de tubes revêtus de matière plastique (25) qui sont recouverts d'une couche faisant barrière ou d'une couche d'oxyde, en particulier pour le soudage ou l'assemblage par collage de deux de tels tubes ou de tubes ayant des garnitures en matière plastique, ou des manchons en matière plastique ou similaires, pour l'enlèvement de la couche faisant barrière ou de la couche d'oxyde sous forme de copeaux sur tout le pourtour de la surface extérieure du tube en matière plastique, transversalement ou essentiellement transversalement à l'axe longitudinal du tube avant l'étape de traitement du soudage, l'appareil d'écroûtage présentant un boîtier (2) avec une tige filetée (3) en sortant et étant au boîtier (2), à l'extrémité opposée au boîtier (2) de laquelle peut être vissée une broche de serrage (4) dans laquelle la tige filetée (3) s'insère par vissage en tournant tout en entraînant le boîtier (2), une mâchoire coulissante (5) en forme de bras étant disposée parallèlement à la tige filetée (3) laquelle mâchoire coulissante est maintenue par une extrémité également dans le boîtier (2) et porte à son extrémité opposée libre une lame d'écroûtage (21) qui dépasse dans la zone de l'extrémité de la broche de serrage (4) logeant la tige filetée (3),
**caractérisé en ce que**
la mâchoire coulissante (5) peut être basculée à l'aide d'un mécanisme de levier en direction de la tige filetée (3) et peut être verrouillée au moyen de ce mécanisme de levier, de sorte que la lame d'écroûtage (21) peut être amenée dans une position prédéfinissable par rapport à la tige filetée (3) et à la broche de serrage (4) et peut être verrouillée de façon à pouvoir être débloquée, afin d'appliquer une force de pression définie et réglable de la lame d'écroûtage (21) sur le tube (25) devant être écroûté, et afin de relever la lame d'écroûtage (21) du tube (25).

2. Appareil d'écroûtage selon la revendication 1,
**caractérisé en ce que** le mécanisme de levier pour le basculage de la mâchoire coulissante (5) constitue un mécanisme de verrouillage qui peut être fermé et ouvert, avec un point mort pour la mâchoire coulissante (5) pour l'établissement de la force de pression de la lame d'écroûtage (21) sur le tube (25) devant être écroûté.

3. Appareil d'écroûtage selon la revendication 1 ou 2,
**caractérisé en ce que** la mâchoire coulissante (5) est logée de façon à pouvoir tourner sur un cercle primitif de référence au moyen d'un axe de rotation (12) maintenu de façon à pouvoir tourner à l'intérieur du boîtier (2).

4. Appareil d'écroûtage selon l'une des revendications précédentes,
**caractérisé en ce que** le mécanisme de levier consiste pour l'essentiel en une mâchoire coulissante (5), un bras de levier (7) et un levier (9), lequel est logé de façon à pouvoir tourner au moyen d'un axe de rotation (10) à l'intérieur du boîtier (2) et auquel le bras de levier (7) est articulé par une première extrémité au levier (9) de façon à pouvoir tourner au moyen d'un axe de rotation (8), le bras de levier (7) étant disposé par sa deuxième extrémité de façon à pouvoir tourner au moyen d'un autre axe de rotation (6) sur la mâchoire coulissante (5).

5. Appareil d'écroûtage selon l'une des revendications précédentes,
**caractérisé en ce que** l'extrémité de la mâchoire coulissante (5) tournée vers le boîtier (2) est conformée en marteau avec une tête de marteau (31), l'axe de rotation (6) du bras de levier (7) étant disposé dans la partie supérieure de la tête de marteau (31) et l'axe de rotation (12) de la mâchoire coulissante (5) logée à l'intérieur du boîtier (2) étant disposé dans la partie inférieure de la tête de marteau (31).

6. Appareil d'écroûtage selon l'une des revendications précédentes,
**caractérisé en ce que** le levier (9) est contrecoudé et consiste en trois tronçons, à savoir un premier tronçon (9') articulé au moyen de l'axe de rotation (10) dans le boîtier (2), lequel premier tronçon (9') est suivi d'un deuxième tronçon (9") se tenant à peu près à angle droit sur ledit premier tronçon (9'), lequel deuxième tronçon (9") est suivi à son tour d'un troisième tronçon (9"') qui se tient à peu près à angle droit et se termine libre, de sorte que le premier tronçon (9') et le troisième tronçon (9"') suivent un tracé parallèle ou plus ou moins parallèle.

7. Appareil d'écroûtage selon l'une des revendications précédentes, **caractérisé en ce que** la mâchoire coulissante (5) possède vue de côté une silhouette en forme de fibre ou de segment de cercle, le contour supérieur (22) de la mâchoire coulissante (5) présentant une allure cintrée concave ou sphérique, contrairement au contour inférieur (22') de la mâchoire coulissante (5), lequel est configuré pour l'essentiel en ligne droite.

8. Appareil d'écroûtage selon l'une des revendications précédentes, **caractérisé en ce que**, sur l'extrémité arrière de la tige filetée (3) sortant du boîtier (2), est montée une poignée tournante (13) qui présente au besoin une tête à six pans creux (14) dans le sens de l'axe longitudinal et de l'axe de rotation (28) de la tige filetée (3) pour la mise en place d'un appareil pour serrage de vis.

9. Appareil d'écroûtage selon l'une des revendications précédentes, **caractérisé en ce que** le levier (9) présente dans la zone de transition entre le premier tronçon (9') et le deuxième tronçon (9") une cavité arquée (11) en forme de courbe concave ou sphérique, à l'intérieur de laquelle le bras de levier (7) est articulé au levier (9) de façon à pouvoir tourner par une première extrémité au moyen de son axe de rotation (8).

10. Appareil d'écroûtage selon l'une des revendications précédentes, **caractérisé en ce que** dans la partie supérieure de la tête de marteau (31) de la mâchoire coulissante (5) est disposée une cavité arquée (29) en forme de courbe concave, à l'intérieur de laquelle se trouve l'axe de rotation (6) avec la deuxième extrémité du bras de levier (7).

11. Appareil d'écroûtage selon l'une des revendications précédentes
**caractérisé en ce que**
au-dessous de l'axe de rotation (6) dans la partie inférieure de la tête de marteau (31) de l'extrémité avant de la mâchoire coulissante (5) se trouve l'axe de rotation (12) qui est maintenu à l'intérieur du boîtier (2) de préférence entre les parois latérales (2', 2") et autour duquel la mâchoire coulissante (5) est maintenue au moyen de sa tête de marteau (31), de façon à pouvoir tourner également à l'intérieur du boîtier (2) sur un plan sur lequel le levier (9) peut basculer et sur lequel se trouve la tige filetée (3) de sorte que la mâchoire coulissante (5) est logée de façon à pouvoir tourner sur un cercle primitif de référence au moyen de l'axe de rotation (12) maintenu de façon à pouvoir tourner à l'intérieur du boîtier (2).

12. Appareil d'écroûtage selon la revendication 1,
**caractérisé en ce que** la broche de serrage (4) présente la forme d'un morceau de tube (4) pourvu d'un taraudage (30) dans lequel la tige filetée (3) est en mesure de se visser en tournant, tout en entraînant le boîtier (2).
